# EUROPEAN PATENT APPLICATION

(11) **EP 3 599 795 A1**
(43) Date of publication of application: **29.01.2020**
(21) Application number: 18382560.3
(22) Date of filing: 25.07.2018
(51) Int. Cl.: H05B 33/08, H05B 37/02, B60Q 1/26

(54) **ELECTRONIC DEVICE, METHOD FOR CONTROLLING A LIGHTING DEVICE AND AUTOMOTIVE LIGHTING DEVICE**

(71) Applicant: VALEO ILUMINACION, 23600 Martos (ES)
(72) Inventor: LOPEZ-LOPEZ, Juan-Antonio, 23600 Martos (ES); SANTAELLA, Juan-Jose, 23600 Martos (ES); LOPEZ, Jose-Luis, 23600 Martos (ES)
(74) Representative: Valeo Vision

(57) **Abstract**

The present invention refers to an electronic device (1) comprising an event input (11), a driver (3) and a switch element (4). The driver (3) is intended to provide electric supply received from the event input to the light sources (6), the driver (3) being configured to operate in at least a first mode and a second mode. The switch element (4) is arranged between the event input (11) and the driver (3) to receive a signal event (12), wherein the switch element (4) is configured to put the driver (3) in the first mode when the switch element (4) receives the signal event (12), and to switch the configuration of the driver to the second mode after a predetermined time lapse.

## Description

### TECHNICAL FIELD

This invention belongs to the field of lighting devices installed in automotive vehicles, and more specifically to the electronic devices used in these automotive lighting devices.

### STATE OF THE ART

Over the past years, car manufacturers are increasingly interested on dynamic functions, such as welcome light, leaving home light, animated tail, running turning indicator...). These functionalities usually involve a permanent power supply instead of dedicated switched function signals of conventional lighting functionalities. This new approach has several advantages as the micro-controller electronics is always powered, but produces some transitory effects which are undesirable, such as, e.g., a flash (hereinafter called initial flash) in the LEDs just after the activation of the functionality, due to the fact that a permanent power supply is provided to these LEDs.

Up to now, these transitory effects have been either accepted by the customer or corrected by including a dedicated hardware element, which involves expensive developments and additional manufacturing processes.

However, a different approach is presented in this invention.

### DESCRIPTION OF THE INVENTION

An alternative solution for the aforementioned problem is provided by an electronic device according to claim 1, a method for controlling a lighting device according to claim 12 and an automotive lighting device according to claim 14. Particular embodiments of the invention are defined by dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In an inventive aspect, the invention provides an electronic device for controlling a lighting module of an automotive lighting device comprising light sources to perform at least one lighting function; wherein the electronic device comprises
an event input intended to receive at least one signal event;
a driver intended to provide electric supply received from the event input to the light sources, the driver being configured to operate in at least a first mode and a second mode;
a switch element arranged between the event input and the driver to receive the signal event wherein the switch element is configured to put the driver in the first mode when the switch element receives the signal event and to switch the configuration of the driver to the second mode after a predetermined time lapse.

This electronic device is suitable for avoiding the transitory effects in the light sources which are operated by the driver, since the signal event, which may be the initial start of the lighting system or just an activation signal, triggers the switch element, which puts the driver in a first mode so that the transitory effect is avoided. After the predetermined time lapse, the driver is configured according to a standard configuration.

In some particular embodiments, the first mode is defined to switch off all the light sources. This first mode is particularly advantageous to avoid the transitory initial flash, which occurs when the lighting system is started with permanent power supply. A simple way of avoiding this flash is by means of this first mode, which turns off all the light sources until the flash time has passed and the driver recovers the standard configuration.

In some particular embodiments, the electronic device further comprises a controlling unit intended to receive the signal event, in such a way the switch element is arranged to receive the signal event from the controlling unit.

The controlling unit is sometimes useful for some lighting functionalities, when a complex animation or a further control is required. This invention is perfectly suitable for these applications.

In some particular embodiments, the second mode of the driver comprises operating according to a configuration provided by the controlling unit. In other particular embodiments, the second mode of the driver comprises operating according to a predetermined operation configuration.

This second mode is the mode adopted by the driver after the predetermined time lapse, and constitutes the standard operation of the driver. However, the invention is not limited to the first and second modes. Indeed, according to the invention, others additional modes could be used in order to allow to the driver to operate in different configurations.

In some particular embodiments, the switch is a power up selector switch.

This power-up selector is one of the possibilities that would fit to include this switch. This power-up selector acts as a major element for setting the driver behaviours or configurations.

In some particular embodiments, the power up selector comprises a RC network adapted to provide a first signal associated with the first mode after receiving the signal event and adapted to automatically provide a second signal associated to the second mode after the predetermined time lapse.

This RC network is a not complex and inexpensive solution for defining a predetermined time lapse. According to the electronic device required and the lighting functionality wished, the RC network is adapted in order to regulate the predetermined times lapse value in a greater or shorter duration.

In some particular embodiments, the predetermined time lapse value is comprised between 5 ms and 100 ms, and particularly between 10 ms and 20 ms.

This is the usual time lapse range suitable for these applications. When a controlling unit, such as a micro-controller, is used to control the driver, this range is enough to avoid any transitory effect.

In some particular embodiments, each of the modes of the driver are included in one-time programmable registers.

One-time programmable registers are a solution which is increasingly used to provide driver settings. This invention is also suitable for including this type of elements.

In some particular embodiments, the lighting function is a turning indicator and/or a tail function, and/or a stop function and/or a reverse light and/or a fog lamp. Indeed, the invention is particularly adapted in order to manage multifunctional lighting.

All of these lighting functionalities may require the avoidance of a transitory effect when the lighting system is started or when the lighting functions are switched between them.

In some particular embodiments, the signal event is the activation of the system.

A transitory effect may occur when the lighting system is started, for example an initial flash due to the permanent power signal which is provided to the lighting functionalities. A way of avoiding this initial flash is by means of an electronic device of the invention, where the switch element puts the driver in a first mode until this flash time has passed.

In other particular embodiments, the signal event is a functionality activation signal.

In this case, the permanent power supply may be provided to a lighting functionality before said functionality is activated. To avoid this transitory effect, the switch element puts the driver in a first mode for a short time lapse and then switches to a controlled setting.

In some particular embodiments, the light sources are solid-state light sources, such as light emitting diodes (LEDs).

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In a second inventive aspect, the invention provides a method for controlling a lighting device comprising an electronic device according to the previous inventive aspect, the method comprising the steps of
a. the switch element receives a signal event and puts the driver in the first mode
b. the switch element puts the driver in the second mode after a predetermined time lapse.

This method operates the lighting device in a way that the transitory effect is avoided. The switch element acts to put the driver in the first mode while the time for the initial flash passes, and then turns it into the second mode.

In some particular embodiments, after the step b., the method further comprises a step c. where a controlling unit comprised in the electronic device takes control of the driver in order to manage other behaviour or configuration of said driver.

This controlling unit is useful when more complex operation is required.

In a third inventive aspect, the invention provides an automotive lighting device comprising an electronic device according to the first inventive aspect.

This lighting device is particularly useful in automotive applications, for lighting functionalities where a failure in one of the light sources may cause a significant loss of the performance.

In some particular embodiments, the lighting device further comprises a first optical element arranged to receive light from the plurality of light sources and to shape the light into a light pattern projected outside the lighting device.

An optical element is an element that has some optical properties to receive a light beam and emit it in a certain direction and/or shape, as a person skilled in automotive lighting would construe without any additional burden.

In some particular embodiments, the optical element is at least one of a light guide, a lens, a reflector or a collimator.

These optical elements are useful to manage the light produced by the plurality of light sources and provide uniform output.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a first general scheme of an electronic device according to the invention.
Figure 2 shows an electric scheme of a portion of a particular embodiment of an electronic device according to the invention.
Figure 3 shows a lighting device comprising an electronic assembly according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

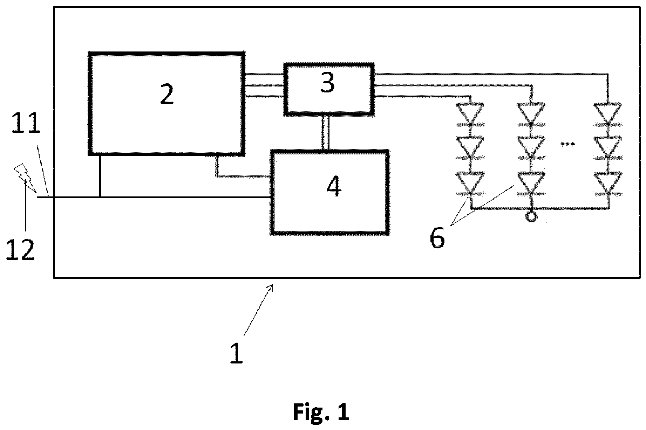

Figure 1 shows a first general scheme of an electronic device 1 according to the invention. This electronic device 1 is suitable for controlling a lighting module of an automotive vehicle comprising light sources to perform a turning indicator function.

The electronic device 1 according to this embodiment comprises
a controlling unit comprising a micro-controller 2 and a driver 3;
a switch 4; and
a plurality of LED segments 6.

The micro-controller 2 is configured to create an animation pattern and to feed the light sources according to this animation pattern when the turning indicator functionality is active. The driver 3 is in turn configured to control the current intended to pass through each of the LED segments.

The switch 4 is present to receive a power up signal 12 by the event input 11. This power up signal 12 would cause an initial flash in the LED segments 6, due to the fact that these LED segments 6 receive a permanent power supply even when the lighting function is not requested. However, the switch element 4 comprises an internal circuitry, which will be described in further figures, to cause an initial lapse where the driver 3 is put into a mode which turns off all the LED segments 6. As a consequence, this initial flash is avoided.

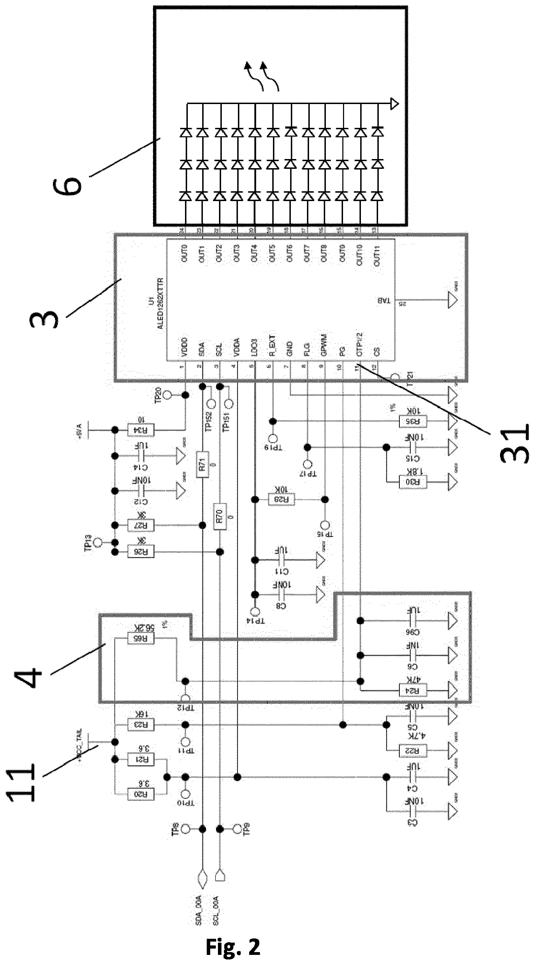

Figure 2 shows an electric scheme of a portion of a particular embodiment of an electronic device 1 according to the invention.

This electronic device 1 comprises an event input 11. This event input 11 may receive an activation signal 12 for activating the lighting functionality in the LED segments 6.

This signal is converted by the RC network of the switch element 4 in a signal which enters the driver 3 in a driver mode input 31 and puts the driver 3 in a first mode. This first mode is a mode wherein the driver 3 puts the LED segments 6 off. In this particular embodiment, this RC network make that the signal in the driver mode input 31 is low for a predetermined time lapse.

After this predetermined time lapse, which depending on the capacitor and resistor values may be comprised between 10 ms and 20 ms, the current value in the driver mode input 31 is increased to be high. As a consequence, the driver 3 changes its configuration to be in a second mode where the LED segments 6 are turned on.

In this embodiment, there are not any micro-controllers 2 which may take control of the driver 3, so the driver 3 is just affected by the signal received by the driver mode input 31, which may be low, which would set the driver 3 in the first mode, or high, which would set the driver 3 in the second mode.

However, in different embodiments, a micro-controller 2 may be comprised in the electronic device for a better control of the driver 3. In this case, the predetermined time lapse will be adjusted so that the micro-controller 2 takes control of the driver 3 before this predetermined time lapse has ended. In the embodiment with a micro-controller 2, the micro-controller 2 takes control of the driver regardless the mode where the driver 3 is configured; the micro-controller 2 takes preference over the driver mode.

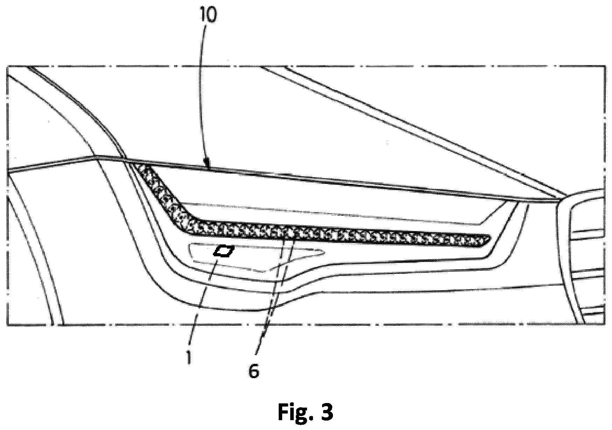

Figure 3 shows a lighting device 10 comprising an electronic assembly 1 according to the invention. This lighting device 10 comprises a turning indicator functionality, which may be activated by the vehicle user.

In normal operation, the lighting device 10 is configured to activate the turning indicator functionality in a running mode, but in the event any of the LED segments 6 fails, the lighting device 10 will activate the turning indicator functionality in static mode, to minimize the effect of this failure.

## Claims

1. Electronic device (1) for controlling a lighting module of an automotive lighting device (10) comprising light sources (6) to perform at least one lighting function; the electronic device (1) comprising
an event input (11) intended to receive at least one signal event (12);
a driver (3) intended to provide electric supply received from the event input to the light sources (6), the driver (3) being configured to operate in at least a first mode and a second mode;
a switch element (4) arranged between the event input and the driver (3) to receive the signal event wherein the switch element (4) is configured to put the driver (3) in the first mode when the switch element (4) receives the signal event (12) and to switch the configuration of the driver to the second mode after a predetermined time lapse.

2. Electronic device (1) according to claim 1, wherein the first mode is defined to switch off all the light sources (6).

3. Electronic device (1) according to any of the preceding claims, further comprising a microcontroller (2) intended to receive the signal event (12), in such a way the switch element (4) is arranged to receive the signal event treated from the microcontroller (2).

4. Electronic device (1) according to claim 3, wherein the second mode of the driver (3) comprises operating according to a configuration provided by the microcontroller (2) or according to a predetermined operation configuration.

5. Electronic device (1) according to any of the preceding claims, wherein the switch element (4) is a power up selector switch.

6. Electronic device (1) according to claim 5, wherein the power up selector comprises a RC network adapted to provide a first signal associated with the first mode after receiving the signal event (12) and adapted to automatically provide a second signal associated to the second mode after the predetermined time lapse.

7. Electronic device (1) according to any of the preceding claims, wherein the predetermined time lapse value is comprised between 5 ms and 100 ms, and particularly between 10 ms and 20 ms.

8. Electronic device according to any of the preceding claims, wherein each of the modes of the driver are included in one-time programmable registers.

9. Electronic device according to any of the preceding claims, wherein the lighting function is a turning indicator and/or a tail function, and/or a stop function and/or a reverse light and/or a fog lamp.

10. Electronic device according to any of the preceding claims, wherein the signal event is the activation of the system.

11. Electronic device according to any of the preceding claims, wherein the signal event (12) is a functionality activation signal.

12. Method for controlling a lighting device comprising an electronic device (1) according to any of the preceding claims, the method comprising the steps of
a. the switch element (4) receives a signal event (12) and puts the driver (3) in the first mode
b. the switch element (4) puts the driver (3) in the second mode after a predetermined time lapse.

13. Method according to claim 12, wherein after the step b., the method further comprises a step c. where a controlling unit comprised in the electronic device (1) takes control of the driver (3) in order to manage other behaviour or configuration of said driver.

14. Automotive lighting device (10) comprising an electronic device (1) according to any of claims 1 to 11.

15. Automotive lighting device (10) according to claim 14, further comprising a first optical element arranged to receive light from the plurality of light sources (6) and to shape the light into a light pattern projected outside the lighting device, the optical element being at least one of a lens, a light guide, a reflector or a collimator.
